# EUROPEAN PATENT APPLICATION

(11) **EP 2 594 975 A1**
(43) Date of publication of application: **22.05.2013**
(21) Application number: 11306511.4
(22) Date of filing: 17.11.2011
(51) Int. Cl.: G02B 6/44

(54) **Water tight optical fiber cable and optical fiber cable water tightening method**

(71) Applicant: Draka Comteq BV, 1083 HJ Amsterdam (NL)
(72) Inventor: Tatat, Olivier, 62231 Sangatte (FR); Lavenne, Alain, 62100 Calais (FR); Bonicel, Jean-Pierre, 92500 Rueil Malmaison (FR)
(74) Representative: Hirsch & Associés

(57) **Abstract**

The invention concerns an optical fiber cable comprising optical fiber modules (2) surrounded by an external jacket (3), a cable end (41) where no jacket surrounds said optical fiber modules (2), a cap (1) surrounding, at said cable end (41), a jacket end (31) but not an optical fiber modules end (21), a solidified liquid (10) filling the gap (5) between said cap (1) and rest of cable so that cable (4) at said jacket end (41) is watertight.

## Description

### FIELD OF THE INVENTION

The invention relates to optical fiber cables, to optical fiber cable water tightening, and to installation of water tightened optical fiber cables.

### BACKGROUND OF THE INVENTION

In Fiber To The Home (FTTH) communication systems, an optical fiber cable goes to a building. When an optical fiber cable is connected to a building of the RISER type, the optical fibers can be connected in a branching point located outside the building itself. Therefore, it is useful to have an optical fiber cable which is water tight in order to avoid water migration into the building through a non water tight optical fiber cable.

According to a first prior art, for example described in patent application WO2010/068196 A1, it is disclosed an optical fiber cable comprising at least one buffer tube holding one or more optical fibers and including a plurality of water blocking plugs at longitudinal intervals along the cable. The plugs create a high normalized pullout force for the optical fibers or for the optical fiber modules. Numerous plugs need to be present in the cable to be installed, what makes this cable more complex and expensive. High pullout forces are hardly compatible with a retractable cable, where optical fiber modules need to be pulled out of the cable.

According to a first prior art, for example described in patent application US6,847,768, it is disclosed a fiber optic tube assembly including a tube, an optical fiber ribbon, and at least one plug. Here again plug(s) need(s) to be present in the cable. The optical fiber ribbon is no loose optical fiber modules that can be easily split to be connected to different terminations in a branching point of a building.

After installation of an optical fiber cable, especially a retractable cable, depending on the environment of the branching point of the building, water could enter the cable core at this branching point at the end of this cable and be transported into the cable. Such water could cause damage to the optical fibers in the cable or electronic components attached to the cable. Especially in cases where the branching point is not located inside a building, but for example in a manhole disposed outside in the street, there is a need to prevent water penetration into the cable.

### SUMMARY OF THE INVENTION

The object of the present invention is to alleviate at least partly the above mentioned drawbacks.

More particularly, the invention aims at making the optical fiber cable water tight at a weak point of the optical fiber cable with respect to water tightness, which is at external jacket end from where optical fiber modules extend unprotected at a branching point. If water can enter the cable at that weak point, water will rather easily progress along the cable inside the cable.

This weak point will be all the more critical when optical fiber modules are loose within external jacket in the cable, because water will have more space to enter the cable and to progress within the cable.

To secure this weak point, the invention aims more particularly at injecting a liquid with viscosity adapted to fill the gap between a cap and a part of a cable surrounded by this cap, and to solidify this injected liquid so that there is no more free space left in the gap between cap and rest of the cable around jacket end. If there is loose space between the optical fiber modules, and if water can enter the cable through this loose space, this loose space is considered included in the gap between cap and rest of cable and will be filled with liquid as well, when liquid is filled in cap, so that cable is really water tight at jacket end. When using this procedure the weak point can be made water tight even if there is no other water tightening elements inside the cable, what makes structure of this optical fiber cable much simpler and enables easy connection of the cable at a branching point.

At a branching point, a viscous liquid which is preferably a curable resin may be injected into the cable core and into a cap that is slid over the cable external jacket, through which cap the optical fiber modules extend. After solidification of the viscous liquid, preferably curing of the resin, a watertight jacket end zone is obtained, so that optical fiber cable becomes water tight at the branching point.

Even if branching point is made of a box which is more or less water tight, use of proposed water tightening of this weak point located at external jacket end of cable, is a second water tight security if water penetrates in the box of the branching point.

Even if the branching point is located inside the building, so that presence of water at the branching point is less likely, the water tightening according to some embodiments of the invention is still rather useful, because besides the water tightening effect that is less critical than in branching points located outside the building, there is a secondary effect, when used at the end of the cable in the top of a building. Only the end of the cable is in that case at the top of the building. The branching point itself is located at the bottom of the building. This secondary effect is preventing movement of modules due to gravity in a vertical installed cable. In an optical fiber cable made water tight at the top end of the cable according to some embodiments of the invention, vertical displacement of an optical fiber module within a vertical disposed cable may be prevented.

According to an object of the invention, this is achieved with an optical fiber cable comprising optical fiber modules surrounded by an external jacket, a cable end where no jacket surrounds said optical fiber modules, a cap surrounding, at said cable end, a jacket end but not an optical fiber modules end, a solidified liquid filling the gap between said cap and the rest of the cable so that the cable at said jacket end is watertight.

According to another object of the invention, this is achieved with an optical fiber cable comprising optical fiber modules surrounded by an external jacket, a cable end where said jacket has been removed from said optical fiber modules so that an end of said jacket is lengthwise separated from an end of said optical fiber modules, a cap surrounding said jacket end and extending from said jacket end in lengthwise direction along both sides of the cable and partially surrounding a length of the external jacket and the cable end, a solidified liquid filling both the gap between said cap and said jacket and the gap between said cap and said optical fiber modules so that cable at said jacket end is watertight.

Preferred embodiments comprise one or more of the following features:
- said solidified liquid is a cured resin.
- said cured resin is a bi-component resin.
- said cap has a first internal diameter around said optical fiber modules on one side of said jacket end and a second internal diameter around said jacket on the other side of said jacket end, wherein the first internal diameter is smaller than the second internal diameter, more preferably wherein the first internal diameter is at least 25% smaller than the second internal diameter.
- said cap comprises two tubular parts presenting respectively two constant internal diameters which are different from each other, each said tubular part of constant internal diameter extending along the cable preferably over more than 25% of the total length of said cap.
- said tubular part with the second internal diameter is longer than said tubular part with the first internal diameter.
- an internal diameter of said cap is continuously increasing between said two tubular parts.
- from said cap and except for the length of cable surrounded by said cap, said optical fiber modules are loose within said external jacket over at least several meters.
- a distance between said optical fiber modules end and cap end which is closest to said optical fiber modules end is more than 50cm, preferably more than 1m.
- said cap is made of a shrunk polymeric material.
- it further comprises an adhesive tape wrapped around said cap so as to extend, from an end of said cap surrounding said external jacket, along both sides of cable.

According to still another object of the invention, this is achieved with a method of water tightening an optical fiber cable including optical fiber modules surrounded by an external jacket, comprising a step of removing said jacket from said optical fiber modules at a cable end, so as to get a jacket end lengthwise separated from an optical fiber modules end, a step of sliding a cap, from said optical fiber modules end, over a given length of said optical fiber modules, until before said jacket end, a step of filling at least part of the space between cap and rest of cable with a liquid, a step of sliding said cap so that said jacket end goes inside the cap, a step of solidifying said liquid between said cap and rest of cable.

Preferred embodiments comprise one or more of the following features:
- said liquid is a curable resin and said solidifying step is a curing step.
- all said steps are performed successively.
- in sliding step, so that said jacket end goes inside the cap, liquid overflows outside the space between said cap and rest of cable.
- said method further comprises a step of shrinking said cap around rest of cable including said jacket end.
- said cable is then installed in a block of apartments.

According to some embodiments of the invention, any way of performing the water tightening method according to some embodiments of the invention can be preferably made with any form of optical fiber cable according to some embodiments of the invention.

Further features and advantages of the invention will appear from the following description of embodiments of the invention, given as non-limiting examples, with reference to the accompanying drawings listed hereunder.

### BRIEF DESCRIPTION OF THE DRAWINGS

Fig. 1 shows the steps of an example of a method of water tightening an optical fiber cable according to some embodiments of the invention.
Fig. 2 shows an example of a cap according to some embodiments of the invention.
Fig. 3A to Fig. 3F show an example of different configurations of an optical fiber cable respectively corresponding to different steps of an example of a method of water tightening an optical fiber cable according to some embodiments of the invention.

### DETAILED DESCRIPTION OF THE INVENTION

A retractable cable is an optical fiber cable with a core comprising multiple optical fiber modules of one or more fibers in parallel lay, without further water blocking provisions in the cable core. A branching point is a point at the end of the cable where the jacket is cut and removed, with modules exceeding the jacket inside a branching closure. A typical length of the exceeding modules may be about one meter and a half.

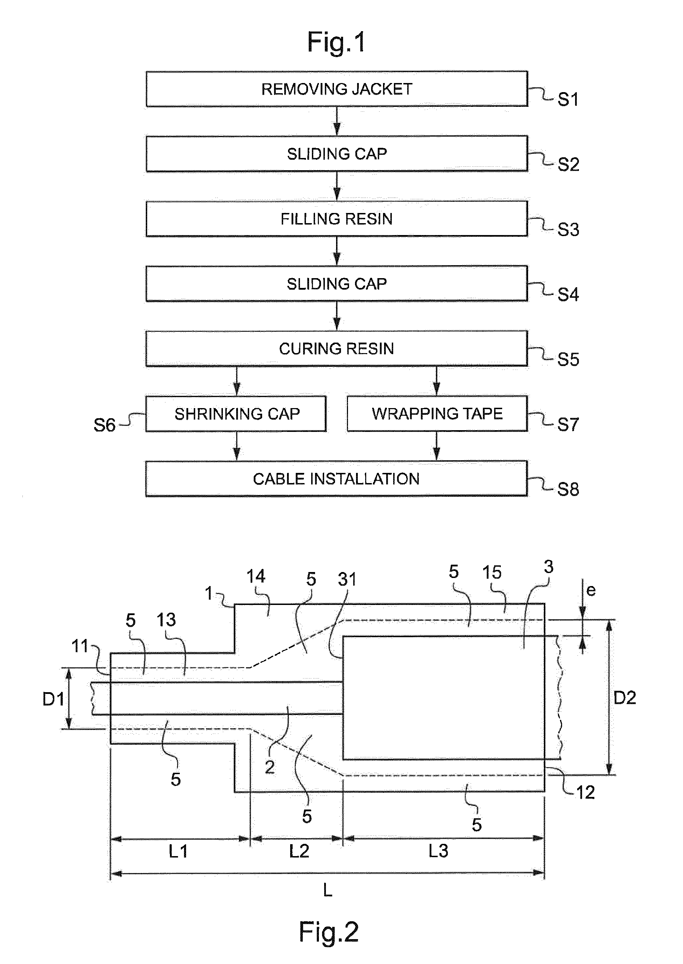

Fig. 1 shows the steps of an example of a method of water tightening an optical fiber cable according to some embodiments of the invention. The method of water tightening an optical fiber cable with optical fiber modules surrounded by an external jacket, comprises several successive steps among which, a removing jacket step S1, a sliding cap step S2, a filling resin step S3, a sliding cap step S4, a curing resin step S5, a shrinking cap step S6 or a wrapping tape step S7, a cable installation step S8.

In step S1, the jacket is removed from said optical fiber modules at a cable end, so as to get a jacket end stopping before an optical fiber modules end. Optical fiber modules are bare over a given length from optical fiber modules end. By removing jacket at cable end, a weak point with respect to water tightness is created at jacket end.

In step S2, a cap is slid, from said optical fiber modules end, over a given length of said optical fiber modules, until before said jacket end. It is close to jacket end, but still spaced apart from jacket end, at about 10 cm from jacket end.

In step S3, at least part of the space is filled between cap and rest of cable with a curable resin. Only part of this space is preferably filled, because some free space is left for the jacket end to go inside the cap, without too much resin overflow. Besides, at jacket end, resin is filled into cable core.

In step S4, the cap is slid so that the jacket end goes inside the cap. When jacket end goes inside the cap, resin in cable core and resin in gap between cap and cable can mix so that there is no more free space left where water could penetrate inside cable. When jacket end goes inside the cap, resin overflows outside the space between cap and rest of cable. This overflow helps ensuring that there is no more free space inside cap.

In step S5, the resin between said cap and rest of cable is cured. Preferably, even after curing, this resin keeps soft, so that it can bear some pressure without breaking. All said steps S1 to S5 are performed preferably successively. However, this curing step S5 may, in a alternative embodiment, be performed during either step S6 or step S7, or even after either step S6 or step S7.

In step S6, the cap which is made of a polymer material is shrunk around rest of cable including jacket end. This helps creating a supplementary barrier to water penetrating inside cable by this end of the cap. At end of step S6, the cap is made of a shrunk polymer material.

In step S7, an adhesive tape is wrapped around the cap so as to extend, from an end of the cap surrounding the external jacket, along both sides of cable. Step S7 is an alternative step to step S6. Step S6 is preferred over step S7 because it leads to a more efficient supplementary barrier to water penetrating inside cable by this end of the cap.

In step S8, installation of the cable is then achieved in a block of apartments. The cable bringing to the branching point and the cable setting in the branching point have already been performed before sealing of cable, that is before all preceding steps of water tightening method. This installation achievement step S8 is a branching step to the contractor in the block of apartments.

Fig. 2 shows an example of a cap according to some embodiments of the invention. A portion of optical fiber cable is inside cap 1. Optical fiber modules 2 are partly surrounded by an external jacket 3. Optical fiber modules 2 extend out of external jacket 3 from jacket end 31 on. In the space 5 located between cap 1 and rest of cable, a curable resin will be injected.

The cap 1 itself comprises three parts. There is a smaller tubular part 13 presenting an internal diameter D1. Smaller tubular part 13 presents an external end 11. There is a bigger tubular part 15 presenting an internal diameter D2. Bigger tubular part 15 presents an external end 12. Between both tubular parts 13 and 15, there can be a conical part 14. Internal diameters D1 and D2 are constant. Internal diameter D1 of smaller tubular part 13 is smaller than internal diameter D2 of bigger tubular part 15. Internal diameter D1 is preferably at least 25% smaller than internal diameter D2. Internal diameter in conical part 14 is continuously raising from D1 to D2. Instead of conical part 14, there can be an extension of bigger tubular part 15. Following lengths are given along the cable. Total length of cap is L. Length of smaller tubular part 13 is L1. Length of conical part 14 is L2. Length of bigger tubular part 15 is L3. Length L3 is longer than length L1. Length L1 and length L3 are both at least 25% of total length L. Preferably, length L3 is more than 50% of total length L. In an alternative, there is no conical part 14, and there in no length L2 : there are only the two tubular parts 13 and 15, and the sum of their respective lengths L1 and L3 is equal to total length L of cap 1. Cap 1 is preferably made of polymeric material, but it can be made of plastic or even of metal like aluminum or steel ; material of cap 1 is chosen to be compatible with materials of the different elements of cable so that there is no chemical reactions between them.

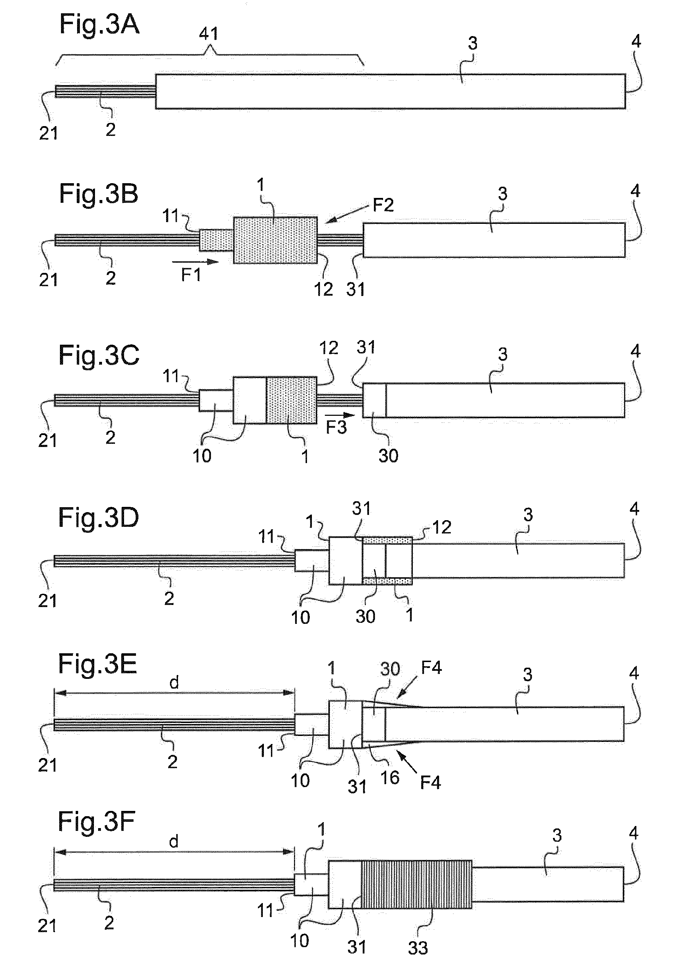

Optical fiber modules 2 are surrounded by external jacket 3 except for a portion where no jacket surrounds the optical fiber modules 2. The cap 1 surrounds, at a cable end, the jacket end 31 but not the optical fiber modules end. Jacket 3 has been removed from optical fiber modules 2 so that jacket end 31 stops before optical fiber modules end (not shown on figure 2, but shown on figures 3A to 3F). The cap 1 surrounds the jacket end 31 and extends from the jacket end 31 along both sides of cable. Cap 1 stops before the optical fiber modules end.

After injection of curable resin, and curing of this resin in the space 5, a solidified liquid, the cured resin, will be filling the gap 5 between the cap 1 and rest of cable so that cable at jacket end 31 is watertight. More particularly, this cured resin will be filling both the gap 5 between cap 1 and jacket 3, which gap 5 is in bigger tubular part 15, and the gap 5 between cap 1 and optical fiber modules 2, which gap 5 is in smaller tubular part 13. Thanks to this cured resin, the cable at this jacket end 31 is made watertight.

Injected curable resin is preferably a bi-component resin. This resin presents a viscosity in a range which allows the resin for fulfilling two different properties. One property is its ability to be sufficiently liquid to penetrate everywhere inside cap. Another property is its ability to be sufficiently viscous to hold everywhere inside cap against gravity during the duration of curing step. This resin presents a good adherence to cap, jacket and optical fiber modules. Advantageously, this resin presents a good adherence to polymers and in particular to polyolefin, reticulated polyolefin, polyamide, thermoplastic rubber, HFFR material, epoxy acrylate, acrylate urethane. Examples of such resins can be a bi-component resin from Dexgreen (registered trademark) or from 3M (registered trademark). Instead of a curable resin, silicone material or a glue can be used, but a curable resin is preferred. This resin can be cured in a rather short time, preferably less than 20 minutes. Radial thickness e of cured resin, in tubular parts 13 and 15, is at least 0.5mm, preferably at least 1mm.

Fig. 3A to Fig. 3F show an example of different configurations of an optical fiber cable respectively corresponding to different steps of an example of a method of water tightening an optical fiber cable according to some embodiments of the invention.

In figure 3A, a cable 4 presents a cable end 41. Optical fiber modules 2 extend outside jacket 3 until optical fiber modules end 21. Optical fiber modules 2 may be for example preferably micro sheath modules containing from 4 to 12 optical fibers or even tubes containing 1 to 4 optical fibers.

In figure 3B, part of jacket 3 surrounding optical fiber modules 2 has been removed so that jacket 3 now stops at jacket end 31 which is before optical fiber modules end 21. A cap 1 is slid along optical fiber modules 2, from optical fiber modules end 21 to just before, for example about 10cm before, jacket end 31. This sliding move is shown with arrow F1. Then curable resin is injected into cap 1 which becomes a resin tanker. This resin injection is shown with arrow F2.

In figure 3C, resin 30 is injected into jacket 3, from jacket end 31 on. In cap 1, resin 10 has only been injected in part of cap 1, for example from end 11 to somewhere in larger diameter part of cap 1. When referring to figure 2, resin 10 would fill tubular part 13, conical part 14, and a portion of tubular part 15. Then, cap 1 is moved towards jacket end 31 until surrounding jacket end 31 goes inside cap 1 and abuts inside cap 1. Then some resin overflows outside cap 1, both through cap end 11 and cap end 12.

In figure 3D, jacket end 31 abutting inside cap 1, resins 10 and 30 come in contact so that there is no more free space in gap between cap 1 and rest of cable. Then the resins 10 and 30 are cured. Cured resins 10 and 30 are still soft after curing so as to be able to bear some pressure exerted around cap 1.

In figure 3E, which is a first alternative, end 12 of cap 1 in polymeric has been shrunk with hot air so as to become shrunk part 16 that adheres on jacket 3.

In figure 3F, which is a second alternative, a cable zone encompassing jacket end 31 and cap end 12 has been recovered by an adhesive tape 33.

Either in figure 3E or in figure 3F, from cap 1 and except for the length of cable 4 surrounded by cap 1, the optical fiber modules 2 are loose within the external jacket 3 over at least several meters. The distance d between optical fiber modules end 21 and cap end 11 which is closest to optical fiber modules end 21 is more than 50cm, preferably more than 1m.

The invention has been described with reference to preferred embodiments. However, many variations are possible within the scope of the invention.

## Claims

1. Optical fiber cable comprising :
- optical fiber modules (2) surrounded by an external jacket (3),
- a cable end (41) where no jacket surrounds said optical fiber modules (2),
- a cap (1) surrounding, at said cable end (41), a jacket end (31) but not an optical fiber modules end (21),
- a solidified liquid (10) filling the gap (5) between said cap (1) and the rest of the cable so that the cable (4) at said jacket end (31) is watertight.

2. Optical fiber cable comprising :
- optical fiber modules (2) surrounded by an external jacket (3),
- a cable end (41) where said jacket (3) has been removed from said optical fiber modules (2) so that an end (31) of said jacket (3) is lengthwise separated from an end (21) of said optical fiber modules (2),
- a cap (1) surrounding said jacket end (31) and extending from said jacket end (31) in lengthwise direction along both sides of the cable (4) and partially surrounding a length of the external jacket and the cable end,
- a solidified liquid (10) filling both the gap (5) between said cap (1) and said jacket and the gap between said cap and said optical fiber modules so that cable at said jacket end is watertight.

3. Optical fiber cable according to any of preceding claims, wherein said solidified liquid (10) is a cured resin.

4. Optical fiber cable according to claim 3, wherein said cured resin (10) is a bi-component resin.

5. Optical fiber cable according to any of preceding claims, wherein said cap (1) has a first internal diameter (D1) around said optical fiber modules (2) on one side of said jacket end (31) and a second internal diameter (D2) around said jacket (3) on the other side of said jacket end (31), wherein the first internal diameter (D1) is smaller than the second internal diameter (D2), more preferably wherein the first internal diameter (D1) is at least 25% smaller than the second internal diameter (D2).

6. Optical fiber cable according to claim 5, wherein said cap (1) comprises two tubular parts (13, 15) presenting respectively two constant internal diameters (D1, D2) which are different from each other, each said tubular part (13, 15) of constant internal diameter (D1, D2) extending along the cable (4) preferably over more than 25% of the total length (L) of said cap (1).

7. Optical fiber cable according to claim 6, wherein said tubular part (15) with the second internal diameter (D2) is longer than said tubular part (13) with the first internal diameter (D1).

8. Optical fiber cable according to any of claims 6 or 7, wherein an internal diameter of said cap is continuously increasing between said two tubular parts (13, 15).

9. Optical fiber cable according to any of preceding claims, wherein, from said cap (1) and except for the length (L) of cable (4) surrounded by said cap (1), said optical fiber modules (2) are loose within said external jacket (3) over at least several meters.

10. Optical fiber cable according to any of preceding claims, wherein a distance (d) between said optical fiber modules end (21) and cap end (11) which is closest to said optical fiber modules end (21) is more than 50cm, preferably more than 1m.

11. Optical fiber cable according to any of claims 1 to 10, wherein said cap (1) is made of a shrunk polymeric material.

12. Optical fiber cable according to claims 1 to 10, wherein it further comprises an adhesive tape (33) wrapped around said cap (1) so as to extend, from an end (12) of said cap (1) surrounding said external jacket (3), along both sides of cable (4).

13. Method of water tightening an optical fiber cable (4) including optical fiber modules (2) surrounded by an external jacket (3), comprising:
- a step (S1) of removing said jacket (3) from said optical fiber modules (2) at a cable end (41), so as to get a jacket end (31) lengthwise separated from an optical fiber modules end (21),
- a step (S2) of sliding a cap (1), from said optical fiber modules end (21), over a given length of said optical fiber modules (2), until before said jacket end (31),
- a step (S3) of filling at least part of the space (5) between cap (1) and rest of cable with a liquid (10),
- a step (S4) of sliding said cap (1) so that said jacket end (31) goes inside the cap (1),
- a step (S5) of solidifying said liquid (10) between said cap (1) and rest of cable.

14. Method of water tightening an optical fiber cable according to claim 13, wherein said liquid (10) is a curable resin and said solidifying step (S5) is a curing step.

15. Method of water tightening an optical fiber cable according to claim 13 or 14, wherein all said steps (S1 to S5) are performed successively.

16. Method of water tightening an optical fiber cable according to any of claims 13 to 15, wherein, in sliding step, so that said jacket end (31) goes inside the cap (1), liquid (10) overflows outside the space (5) between said cap (1) and rest of cable.

17. Method of water tightening an optical fiber cable according to any of claims 13 to 16, wherein said method further comprises a step (S6) of shrinking said cap (1) around rest of cable including said jacket end (31).

18. Method, according to any of claims 13 to 17, of water tightening an optical fiber cable (4) according to any of claims 1 to 12, wherein said cable (4) is then installed in a block of apartments.
